Europäisches Patentamt

**European Patent Office**

Office européen des brevets

(11) Veröffentlichungsnummer: **0 023 043**
**B1**

(12) **EUROPÄISCHE PATENTSCHRIFT**

(45) Veröffentlichungstag der Patentschrift:
**04.12.85**

(21) Anmeldenummer: **80104273.0**

(22) Anmeldetag: **19.07.80**

(51) Int. Cl.⁴: **F 24 D 3/00**

(30) Priorität: **24.07.79 DE 2930044**

(43) Veröffentlichungstag der Anmeldung:
**28.01.81 Patentblatt 81/4**

(45) Bekanntmachung des Hinweises auf die Patenterteilung:
**04.12.85 Patentblatt 85/49**

(84) Benannte Vertragsstaaten:
**BE CH FR GB IT LI LU NL SE**

(56) Entgegenhaltungen:
**CH - A - 571 689**
**DE - A - 2 144 437**
**DE - A - 2 702 337**
**DE - A - 2 719 682**
**DE - A - 2 817 446**
**FR - A - 1 008 592**
**FR - A - 1 029 954**
**FR - A - 1 045 671**
**FR - A - 2 160 961**

(54) **Flächenheizung.**

(73) Patentinhaber: **ZUGLA AG, Hauptstrasse 34,**
**CH-8750 Glarus (CH)**

(72) Erfinder: **Haugeneder, Hans, Unterer Markt 8,**
**A-3335 Weyer (AT)**

(74) Vertreter: **Skuhra, Udo, Dipl.-Ing., Reinhard, Skuhra,**
**Weise Patentanwälte Leopoldstrasse 51,**
**D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Flächenheizung, insbesondere Fußbodenheizung, gemäß dem Oberbegriff des Patentanspruchs 1.

In der DE-A-2 702 337 ist eine Flächenheizung der eingangs genannten Art beschrieben, bei welcher die Strömung des Heizmediums durch den Flächenbelag mäanderförmigen Verlauf hat (Fig. 5). Nach dem Verlegen des Flächenbelages werden die seitlichen Anschlußstücke am Flächenbelag angebracht. Hierbei ergibt sich der Nachteil, daß bei der Montage der Flächenheizung dem Monteur anzugeben ist, wie der Belag im Raum zu verlegen ist, d. h. in welcher Richtung die das Heizmedium führenden Kanäle des Flächenbelages ausgerichtet werden; darüber hinaus muß bei der Anbringung der seitlichen Anschlußstücke äußerst sorgfältig gearbeitet werden, um die Dichtheit der Flächenheizung sicherzustellen.

Eine Flächenheizung, bestehend aus einem vom Heizmedium durchflossenen Flächenbelag mit weitgehend parallelen Kanälen und seitlichen Anschlußelementen ist weiterhin aus der FR-A-1 029 954 bekannt. Zur Verbindung von in einem Grundelement vorgesehenen, vom Heizmedium direkt durchflossenen Kanälen sind seitliche Anschlußstücke in Form von starren Verbindungsstücken, z. B. U-Rohren, vorgesehen oder es wird ein Sammler zum seitlichen Anschluß an die Kanäle im Grundelement verwendet. Das Grundelement hat im wesentlichen die Größe der Fläche des Raumes, in welchem eine derartige Flächenheizung verlegt werden soll, so daß es sich schwierig transportieren und verlegen läßt. Insbesondere muß das Grundelement weitgehend exakt der Fläche entsprechen, auf welcher die Flächenheizung zu verlegen ist.

Nach einer weiteren Ausführungsform (Fig. 10) ist eine parallele Zuführung des Heizmediums zu mehreren Kanälen beabsichtigt.

Bei einer weiteren Abwandlung (Fig. 12) werden mehrere Gruppen von Heizkanälen zusammengeschaltet; bei einer derartigen Zusammenschaltung von Heizkanälen wird nachteiligerweise jeweils der erste, von einem Verteilerstück beschickte Kanal des Grundelementes vom Heizmedium mit höherer Strömungsgeschwindigkeit durchflossen als die übrigen Heizkanäle. Dies führt zu einer ungleichmäßigen Wärmeabgabe und Erwärmung der Heizplatte.

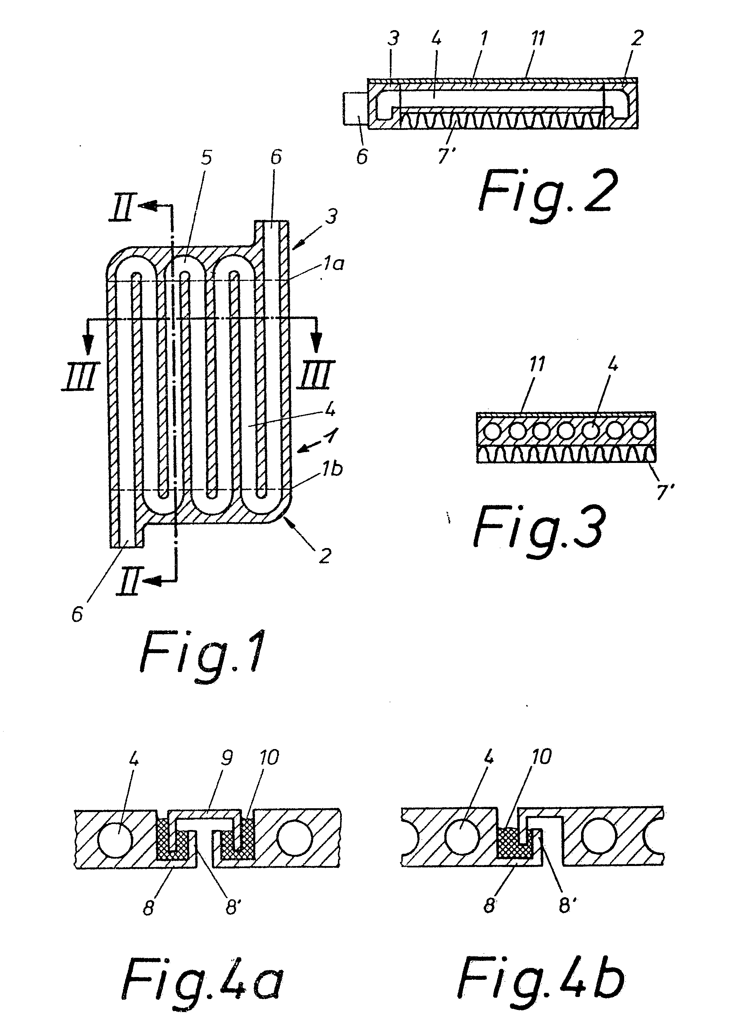

Bei einer anderen Ausführungsform (Fig. 2) sind die einzelnen Heizkanäle durch einzelne U-förmige Rohrstücke miteinander zu verbinden, um einen im wesentlichen mäanderförmigen Verlauf der Heizkanäle zu erreichen, was erheblichen Aufwand bei der Montage dieser Flächenheizung bedeutet.

Ein weiterer Nachteil der bekannten Flächenheizung ist das verwendete elastische Material in Form eines Teppichs oder Fußbodenbelags, z. B. Gummi; bei einer derartigen Flächenheizung werden Unebenheiten des Bodens nicht ausgeglichen; außerdem ist die Wärmeleitfähigkeitseigenschaft eines derartigen Materials ungünstig.

Aus der FR-A-1 045 671 ist eine Flächenheizung, bestehend aus Grundelementen und Kopfelementen, bekannt, bei der einzelne Platten (Fig. 8 und 9) Hohlräume zur Aufnahme von Rohren enthalten.

Der Erfindung liegt demgegenüber die Aufgabe zugrunde, eine Flächenheizung der eingangs genannten Art derart zu verbessern, daß sie auf einfache Weise und in Räumen unterschiedlicher Flächengröße verlegt werden kann.

Diese Aufgabe wird erfindungsgemäß durch den Gegenstand des Patentanspruchs 1 gelöst.

Weitere Ausgestaltungen der Erfindung ergeben sich aus den Unteransprüchen.

Die Erfindung schafft eine Flächenheizung, insbesondere Fußbodenheizung, die aus einer beliebig großen Zahl von Platteneinheiten zusammensetzbar ist, wobei die Platteneinheiten weitgehend vorgefertigt und mit einer zum Boden gewandten Isolierschicht versehen sind. Damit erübrigt sich vor dem Verlegen der Flächenheizung das Einbringen einer Isolierschicht auf dem Unterboden. Durch die U-förmige Querschnittsform der Platteneinheiten ist darüber hinaus insbesondere im Hinblick auf den Transport eine sichere und feste Aufnahme der Isolierschichten an den Platteneinheiten gewährleistet.

Die Flächenheizung ist mit dem weiteren Vorteil verbunden, daß im Bedarfsfall jede Platteneinheit auch aus mehr als einem Grundelement zusammengesetzt sein kann, also etwa zweifache Länge gegenüber einer normalen Platteneinheit, bestehend aus einem Grundelement und zwei Anschlußelementen, besitzt. Infolgedessen ist es nicht erforderlich, eine Flächenheizung dieser Art bereits vor ihrem Einbau auf die besonderen Maße der Fläche des Raumes, in welchem die Flächenheizung verlegt werden soll, vorzukonzipieren; durch Hintereinanderschaltung einer Mehrzahl derartiger Platteneinheiten kann jede beliebige Raumfläche mit solchen Platteneinheiten versehen werden.

Die Verwendung von seitlichen Profilschienen an den Platteneinheiten ermöglicht eine exakte seitliche Zuordnung der einzelnen Platteneinheiten zueinander.

Die Platteneinheiten lassen sich vorteilhafterweise als Flächenheizplatten anstelle üblicher Radiatoren, insbesondere in Verbindung mit einem Niedertemperaturheizsystem verwenden, wobei die Seite der Platteneinheit mit der Isolierschicht gegen das Mauerwerk gerichtet ist und damit die Abstrahlung auf das Mauerwerk durch die Isolierschicht stark eingeschränkt ist. Schließlich läßt sich die Flächenheizung auch als Deckenheizung einsetzen.

Im folgenden werden bevorzugte Ausführungsformen der Flächenheizung anhand der Zeichnung beschrieben. Es zeigt

Fig. 1 eine horizontale Schnittansicht einer Platteneinheit,

Fig. 2 eine Schnittansicht einer Platteneinheit entlang der Linie II-II in Fig. 1,

Fig. 3 eine Fig. 2 entsprechende und um 90° gedrehte Schnittansicht einer Platteneinheit entlang der Linie III-III in Fig. 1 und

Fig. 4a und Fig. 4b Teilschnittansichten von zwei nebeneinander verlegten Platteneinheiten mit seitlichen Profilschienen.

Im folgenden wird unter Bezugnahme auf Fig. 1 eine Flächenheizung erläutert. Jede Platteneinheit der Flächenheizung besteht aus einem vom Heizmedium durchflossenen Flächenbelag mit einem Grundelement 1 und zwei Anschlußelementen 2 und 3. Die Elemente 1, 2 und 3 sind getrennt herstellbar; die Anschlußelemente 2 und 3 haben im wesentlichen identische Form. Die Stirnflächen des Grundelementes 1 sind in Fig. 1 durch strichlierte Linien 1a und 1b angedeutet. Das Grundelement 1 besteht gemäß Fig. 3 aus einer Grundplatte, in welcher weitgehend parallel verlaufende Kanäle 4 mit rundem oder ovalem Querschnitt vorgesehen sind.

Bei der dargestellten Ausführungsform ist jede Platteneinheit durch die getrennt hergestellten Elemente 1, 2 und 3 gebildet. Die Anschlußelemente 2 und 3 werden mit dem Grundelement 1 auf solche Weise verschweißt, daß in den Anschlußelementen 2 und 3 ausgebildete, brückenförmige Verbindungskanäle 5 in Deckung mit den Öffnungen der Kanäle 4 in dem Grundelement 1 stehen und sich ein etwa mäanderförmiger Verlauf der Durchlaufkanäle ergibt, wie in Fig. 1 gezeigt ist. Jedes Anschlußelement 2 und 3 weist außerdem einen Anschluß 6 auf, der entweder mit einem entsprechenden Anschluß 6 einer anderen Platteneinheit oder mit der Zulauf- bzw. Rücklaufleitung eines Heizkreises verbunden wird.

Die Platteneinheiten werden aus Kunststoff hergestellt, was zu einem sehr geringen Gewicht derselben führt. Die Anschlußelemente und das Grundelement werden jeweils zum Beispiel durch Kunststoff-Extrusionsverfahren hergestellt. Außerdem können die Platteneinheiten auch aus Metall, z. B. Aluminium, bestehen.

Fig. 2 ist eine Schnittansicht entlang der Linie II-II in Fig. 1. Jede Platteneinheit weist gemäß Fig. 2 eine Isolierschicht 7 als integriertes Element auf. Zur Aufnahme der Isolierschicht 7, beispielsweise aus Polyurethan, hat die Platteneinheit im Schnitt entsprechend der Linie II-II (Fig. 1) etwa U-förmiges Profil. Die Anschlußelemente 2 und 3 haben größere Höhe als das Grundelement 1, wodurch sich das U-förmige Profil ergibt. Die die Schenkel dieses U-Profils bildenden Anschlußelemente 2 und 3 nehmen zwischen sich die Isolierschicht 7 auf. Die Isolierschicht 7 schließt mit den unteren Flächen (Fig. 2) der Anschlußelemente 2 und 3 ab. Damit erübrigt sich der zusätzliche Einbau von Isolierschichten auf dem darunterliegenden Boden. Ferner ist eine sichere Abstützung der Platteneinheiten und damit der gesamten Flächenheizung durch die die Schenkel bildenden Anschlußelemente 2, 3 gegenüber dem Unterboden gewährleistet, da die Unterflächen der Schenkel direkt auf dem Unterboden aufliegen.

Die in Fig. 2 und 3 gezeigte Platteneinheit hat eine Länge von etwa 1 m und eine Breite von 50 cm; die Höhe der in Fig. 2 gezeigten Platteneinheit liegt bei 30 mm. Insbesondere bei Platteneinheiten mit größeren Dimensionen sind in dem zwischen den Anschlußelementen 2 und 3 gebildeten Raum, der mit der Isolierschicht 7 ausgefüllt ist, zusätzliche Stützschienen mit einer der Isolierschicht 7 entsprechenden Höhe vorgesehen, um ein Durchbiegen der Platteneinheiten bei Belastung zu verhindern.

Wie in Fig. 4a gezeigt ist, sind an den Seiten jeder Platteneinheit, beispielsweise nur entlang des Grundelementes 1, seitliche Profilschienen 8 ausgebildet, die im wesentlichen L-förmiges Profil haben. Die Höhe des freien Schenkels des L-Profils 8, der mit 8' bezeichnet ist, beträgt etwa 2/3 der Gesamthöhe der Platteneinheit. Die Profilschienen 8 ermöglichen die Anordnung der einzelnen Platteneinheiten in fixiertem seitlichen Abstand zueinander mittels Abstandselementen 9, die in durch die Profile 8 gebildeten Aufnahmen unter Einsatz von dauerelastischem Kitt 10 oder dergleichen eingesteckt werden. Die Platteneinheiten sind auch abwechselnd in zueinander um 180° umgedrehter Lage verlegbar, so daß die freien Schenkel 8' gegeneinander arretierbar sind, wie dies in Fig. 4b gezeigt ist. Der von oben zugängliche freie Raum des einen Profils 8 wird nach Fig. 4b mit dauerelastischem Kitt 10 ausgefüllt, so daß nach der Verlegung Relativverschiebungen zwischen benachbarten Platteneinheiten nahezu ausgeschlossen sind.

Nach Fig. 2 und 3 weist jede Platteneinheit an derjenigen Oberfläche, an welcher die Wärmeabstrahlung erwünscht ist, einen Metallfilm oder eine Metallschicht 11, beispielsweise eine Aluminiumfolie, auf, die eine gleichmäßige Oberflächenwärmeverteilung sicherstellt. Außerdem liefert die Metallschicht 11 einen Schutz der aus Kunststoff hergestellten Platteneinheit gegen Korrosion durch eine Trag- und Verschleißschicht, die gegebenenfalls auf die Platteneinheiten aufgebracht wird.

Die zwischen den Platteneinheiten verbleibenden Abstände werden vor dem Aufbringen der Trag- oder Verschleißschicht mit einer Vergußmasse ausgefüllt oder mit dauerelastischem Kitt, die bzw. der mit der oberen Fläche der Platteneinheiten und der oberen Fläche der Abstandselemente 9 abschließt. Die Flächenheizung läßt damit insbesondere auch nachträglich einen Einbau in Altbauten zu.

**Patentansprüche**

1. Flächenheizung, insbesondere Fußbodenheizung, bestehend aus einem vom Heizmedium durchflossenen Flächenbelag mit einem Grundelement, das weitgehend parallele Kanäle aufweist, und mit seitlichen Anschlußelementen (2, 3), die einen mäanderförmigen Verlauf des durch die Kanäle geführten Heizmediums festlegen, dadurch gekennzeichnet, daß der Flächenbelag aus mehreren neben- und/oder hintereinandergeschalteten Platteneinheiten (1, 2, 3) besteht, daß jede Platteneinheit (1, 2, 3) als Fertigbauteil ein im Querschnitt U-förmiges Profil aufweist, dessen Schenkel durch die Anschlußelemente (2, 3) gebildet sind, und daß in dem U-förmigen Profil eine Isolierschicht (7) eingebettet ist.

2. Flächenheizung nach Anspruch 1, dadurch gekennzeichnet, daß jede Platteneinheit aus einem Grundelement (1) und zwei am Grundelement angeschweißten Anschlußelementen (2, 3) besteht.

3. Flächenheizung nach Anspruch 1 oder 2, dadurch gekennzeichnet, daß jede Platteneinheit (1, 2, 3) seitliche Profilschienen (8, 8') aufweist.

4. Flächenheizung nach Anspruch 1, dadurch gekennzeichnet, daß die Isolierschicht (7) aus Polyurethan besteht.

5. Flächenheizung nach wenigstens einem der vorangehenden Ansprüche, dadurch gekennzeichnet, daß auf der zur Isolierschicht (7) abgewandten Oberfläche der Platteneinheiten (1, 2, 3) ein Metallfilm (11) oder eine Metallfolie vorgesehen sind.

6. Flächenheizung nach wenigstens einem der vorangehenden Ansprüche, dadurch gekennzeichnet, daß in dem von der Isolierschicht (7) eingenommenen Raum jeder Platteneinheit zusätzliche Stützschienen vorgesehen sind.

## Claims

1. Surface heating means, in particular floor heating means, consisting of a surfache covering through which heating medium passes having a base element which has substantially parallel channels, and with lateral connecting elements (2, 3), which provide a meandering course for heating medium conducted through the channels, characterised in that the surface covering consists of a plurality of plate units (1, 2, 3), connected adjacent to and/or behind one another, in that each plate unit (1, 2, 3), has, as a pre-formed component a profile which is U-shaped in cross-section, of which the side pieces are formed by the connecting elements (2, 3), and in that a insulating layer (7) is embedded in the U-shaped profile.

2. Surface heating means according to claim 1, characterised in that each plate unit consists of a base element (1) and two connecting elements welded to the base element.

3. Surface heating means according to claim 1 or 2, characterised in that each plate unit (1, 2, 3), has lateral profile rails (8, 8').

4. Surface heating means according to claim 1, characterised in that the insulating layer (7) consists of polyurethane.

5. Surface heating means according to at least one of the preceding claims, characterised in that a metal film (11) or a metal foil is provided on the surface of the plate units (1, 2, 3) which faces away from the insulating layer (7).

6. Surface heating means according to at least one of the preceding claims, characterised in that each plate unit is provided with additional supporting rails in the space occupied by the insulating layer (7).

## Revendications

1. Chauffage de surface, notamment chauffage de sol, constitué d'une chape de surface traversée par un agent chauffant et comprenant un élément de base comportant des canalisations sensiblement parallèles et des éléments de raccordement latéraux (2, 3) acheminant l'agent chauffant passant par les canalisations selon un parcours en méandres, caractérisé en ce que la chape de surface est constituée par plusieurs plaques unitaires (1, 2, 3) raccordées les unes contre les autres et/ou les unes après les autres, en ce que chaque plaque unitaire (1, 2, 3) présente sous sa forme d'élément de construction terminé une section transversale à profil en U dont les branches sont formées par les éléments de raccordement (2, 3), et en ce que dans le profil en U est incorporé une couche isolante (7).

2. Chauffage de surface selon la revendication 1, caractérisé en ce que chaque plaque unitaire est constituée par un élément de base (1) et par deux éléments de raccordement (2, 3) soudés à l'élément de base.

3. Chauffage de surface selon la revendication 1 ou 2, caractérisé en ce que chaque plaque unitaire (1, 2, 3) présente des bandes profilées latérales (8, 8').

4. Chauffage de surface selon la revendication 1, caractérisé en ce que la couche isolante (7) est constituée en polyuréthane.

5. Chauffage de surface selon l'une quelconque des revendications précédentes, caractérisé en ce que sur la surface des plaques unitaires (1, 2, 3) qui est à l'opposé de la couche isolante (7) est prévu un film métallique (11) ou une feuille métallique.

6. Chauffage de surface selon l'une quelconque des revendications précédentes, caractérisé en ce que dans l'espace occupé par la couche isolante (7), chaque plaque unitaire est munie en plus de bandes d'appui.

Fig.2

Fig.1

Fig.3

Fig.4a

Fig.4b